# EUROPEAN PATENT APPLICATION

(11) **EP 4 198 066 A1**
(43) Date of publication of application: **21.06.2023**
(21) Application number: 21214741.7
(22) Date of filing: 15.12.2021
(51) Int. Cl.: C08F 255/02, C08F 265/08, C09J 4/06, C09J 5/04, C08F 279/04

(54) **A CURABLE TWO-STEP AND TWO-PART ACRYLIC STRUCTURAL ADHESIVE COMPOSITION**

(71) Applicant: Henkel AG & Co. KGaA, 40589 Düsseldorf (DE); Henkel IP & Holding GmbH, 40589 Düsseldorf (DE)
(72) Inventor: Chen, Chunfu, Kanagawa Prefecture, 211-0067 (JP); Fearon, Stephen, Swords, Co. Dublin, K67 EP99 (IE); Iwasaki, Shuichi, Kanagawa prefecture, 211-0065 (JP); Condron, David, Dublin, 14 (IE)

(57) **Abstract**

The present invention relates to a curable two-step and two-part adhesive composition comprising a first part comprising: at least one (meth)acrylate monomer comprising OH-group; an urethane (meth)acrylate oligomer; a rubber; an adhesion promoter; and a radical initiator; and a second part comprising: at least one (meth)acrylate monomer comprising OH-group, which can be same or different than the at least one (meth)acrylate monomer comprising OH-group in the first part; a nitrile butadiene rubber; and a reducing agent. The composition can be used as a structural adhesive, for example in speaker magnet bonding, e-motor structural bonding and metal component bonding.

## Description

### Technical field of the invention

The present invention relates to a curable two-step and two-part acrylic structural adhesive composition suitable for use as a structural adhesive for example in speaker magnet bonding, e-motor structural bonding and metal component bonding.

### Technical background to the invention

Structural adhesives are widely used in the automotive industry, for example display frame bonding, car body bonding, speaker magnet bonding and electric motor magnet bonding. Generally, all these applications demand extremely good bond strength throughout the vehicle's life cycle.

Ordinary two component (2K) adhesives, which require mixing before use, have been used for a long time in structural bonding applications. These ordinary 2K adhesives usually require relative long cure time at room temperature, and therefore, are not suitable for high-speed production applications. Especially in applications, which require bonding components to be fixed at room temperature in a very short time (within 60 seconds).

Ordinary UV curable adhesives can be cured relatively fast; however, they are not suitable for non-transparent substrates such as metal substrate bonding.

Ordinary cyanoacrylate adhesive can be cured instantly; however, they cannot withstand strict condition reliability testing (high temperature, high humidity testing).

Therefore, there is a need for a structural adhesive which provides fast room temperature curability, high bonding adhesion and high reliability performance.

### Summary of the invention

The present invention relates to a curable two-step and two-part adhesive composition comprising: a first part comprising: at least one (meth)acrylate monomer comprising OH-group; an urethane (meth)acrylate oligomer; a rubber; an adhesion promoter; and a radical initiator; and a second part comprising: at least one (meth)acrylate monomer comprising OH-group, which can be same or different than the at least one (meth)acrylate monomer comprising OH-group in the first part; a nitrile butadiene rubber; and a reducing agent.

The present invention also relates to use of the curable two-step and two-part adhesive composition according to the present invention as a structural adhesive, preferably as a structural adhesive in speaker magnet bonding, e-motor structural bonding and metal component bonding.

The present invention encompasses a method of bonding two substrates comprising a following steps: 1) applying a first part of a curable two-step and two-part adhesive composition according to any of preceding claims 1 to 14 to a first substrate to be bonded; 2) applying a second part of a curable two-step and two-part adhesive composition according to the present invention to a second substrate to be bonded; 3) overlaying the first substrate on the second substrate, or overlaying the second substrate on the first substrate; and 4) bonding the first substrate to the second substrate by mixing the first part and the second part of the curable two-step and two-part adhesive composition at the bond line and curing the composition.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term "*one component (1K) composition*" refers to a composition where, during storage of the composition, the composition components are all admixed together but the properties of the composition, including viscosity, remain consistent enough over the time of storage to permit successful utility of the composition at a later time.

"*Two-component (2K) compositions*" are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in orderto accelerate the cross-linking reaction.

"*Two-step compositions*" are understood to be compositions in which a first component/part (A) and a second component/part (B) must be stored in separate vessels because of their (high) reactivity. The two components/parts are mixed by applying the first component/part (A) onto a first substrate and the second component/part onto a second substrate and react when the first and second substrates are combined with bond formation and thereby formation of a polymeric network.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a curable two-step and two-part adhesive composition comprising: a first part comprising: at least one (meth)acrylate monomer comprising OH-group; an urethane (meth)acrylate oligomer; a rubber; an adhesion promoter; and a radical initiator; and a second part comprising: at least one (meth)acrylate monomer comprising OH-group, which can be same or different than the at least one (meth)acrylate monomer comprising OH-group in the first part; a nitrile butadiene rubber; and a reducing agent.

The composition according to the present invention provides fast room temperature curability, high bonding adhesion and high reliability performance suitable for use in various structural bonding applications such as speaker magnet bonding, e-motor structural bonding and other metal component bonding applications where fast assembly production speed and high bonding reliability performance are required.

The composition according to the present invention comprises a (meth)acrylate monomer comprising OH-group. The (meth)acrylate monomer comprising OH-group provides good adhesion to metal surfaces.

A (meth)acrylate monomer comprising OH-group is present in both parts of the composition and the (meth)acrylate monomer comprising OH-group can be same or different in the first and second parts. The (meth)acrylate monomer comprising OH-group is independently selected to the first part and the second part from the group consisting of 2-hydroxyethyl (meth)acrylate, 2-hydroxypropyl(meth)acrylate, 2-hydroxybutyl (meth)acrylate, 1,6-hexanedioldiacrylate, dipentaerythritol monohydroxy penta(meth)acrylate, hydroxypentyl methacrylate, hydroxyheptyl methacrylate, hydroxynonyl metacrylate, hydroxydecyl methacrylate, their positions isomers, the ethoxylated and or propoxylated derivatives thereof, the adducts thereof with lactones, diethyleneglycol mono methacrylate, polypropylene glycol mono methacrylate, and mixtures thereof, preferably said (meth)acrylate monomer comprising OH-group is 2-hydroxyethyl methacrylate.

Suitable commercially available (meth)acrylate monomer comprising OH-group for use in the present invention include but is not limited to 2-hydroxyethyl methacrylate from Mitsubishi Gas Chemical Co., Ltd.

The (meth)acrylate monomer comprising OH-group may be present in the first part of the composition according to the present invention from 10% to 50% by weight by the total weight of the first part, preferably from 12.5% to 40%, and more preferably from 15% to 35% and/or the (meth)acrylate monomer comprising OH-group may be present in the second part from 10% to 60% by weight by the total weight of the second part, preferably from 15% to 50%, and more preferably from 20% to 40%.

When the quantity of the (meth)acrylate monomer comprising OH-group is less than 10% in either part of the composition it may lead to poor adhesion properties and decreased lap sheer strength and high temperature, high humidity performance. Whereas quantity over 50% or 60% in respective parts may lead to poor adhesion properties and may attract water, which may lead to a decreased high temperature, high humidity performance.

The composition according to the present invention comprises an urethane (meth)acrylate oligomer. The urethane (meth)acrylate oligomer is always in the first part of the composition.

Suitable urethane (meth)acrylate oligomer for use in the present invention may be an aromatic urethane (meth)acrylate oligomer, aliphatic urethane (meth)acrylate oligomer or cyclic aliphatic urethane (meth)acrylate oligomer, preferably the urethane (meth)acrylate oligomer is an aromatic urethane (meth)acrylate oligomer or cyclic aliphatic urethane (meth)acrylate oligomer, more preferably the urethane (meth)acrylate oligomer is an aromatic urethane (meth)acrylate oligomer.

Suitable urethane (meth)acrylate oligomer for use in the present invention may be formed several ways.

An urethane (meth)acrylate oligomer may be formed A) from the reaction of a diisocyanate and polyol followed by a subsequent capping reaction with a hydroxy-functional (meth)acrylate.

The diisocyanate may be an aromatic diisocyanate, an aliphatic diisocyanate or a cyclic aliphatic diisocyanate, wherein the aromatic diisocyanate may be selected from the group consisting of 2,4-toluene diisocyanate, 2,6-toluene diisocyanate 4,4-methylene di(phenylisocyanate), 2,4-methylene di(phenylisocyanate), 2,2-methylene di(phenylisocyanate) 1,5-naphtalene diisocyanate and mixtures thereof;
and wherein the aliphatic diisocyanate may be selected from the group consisting of tetramethylene diisocyanate, hexamethylene diisocyanate, pentamethylene diisocyanate, 1,4-diisocyanatobutane, and mixtures thereof;
and wherein the cyclic aliphatic diisocyanate may be selected from the group consisting of isophorone diisocyante, 4,4-methylenebis(cyclohexyl isocyanate), 1,4 cyclohexane diisocyanate and mixtures thereof;
and
wherein the polyol may be selected from the group consisting of neopentylclycol, trimethylolpropane, pentrarythritol, deipentarythritol, polyethylene glycol, polytatramethylene ether glycol, and mixtures thereof; and
wherein the hydroxy-functional (meth)acrylate may be selected from the group consisting of hydroxyethyl methacrylate, hydroxypropyl methacrylate, hydroxybutyl methacrylate, hydroxypently methacrylate, hydroxy heptyl methacrylate, hydroxynonyl methacrylate, hydroxydecyl methacrylate and mixtures thereof.

Alternatively, an urethane (meth)acrylate oligomer may be formed B) from the reaction of a diisocyanate and a hydroxy-functional (meth)acrylate.

The diisocyanate may be an aromatic diisocyanate, an aliphatic diisocyanate or a cyclic aliphatic diisocyanate, wherein the aromatic diisocyanate may be selected from the group consisting of 2,4-toluene diisocyanate, 2,6-toluene diisocyanate 4,4-methylene di(phenylisocyanate), 2,4-methylene di(phenylisocyanate), 2,2-methylene di(phenylisocyanate) 1,5-naphtalene diisocyanate and mixtures thereof;
and wherein the aliphatic diisocyanate may be selected from the group consisting of tetramethylene diisocyanate, hexamethylene diisocyanate, pentamethylene diisocyanate, 1,4-diisocyanatobutane, and mixtures thereof;
and wherein the cyclic aliphatic diisocyanate may be selected from the group consisting of isophorone diisocyante, 4,4-methylenebis(cyclohexyl isocyanate), 1,4 cyclohexane diisocyanate and mixtures thereof;
and
wherein the hydroxy-functional (meth)acrylate may be a hydroxy monofuctional (meth)acrylate, preferably selected from the group consisting of hydroxyethyl methacrylate, hydroxypropyl methacrylate, hydroxybutyl methacrylate, hydroxypentyl methacrylate, hydroxy heptyl methacrylate, hydroxynonyl methacrylate, hydroxydecyl methacrylate, and mixtures thereof.

Alternatively, an urethane (meth)acrylate oligomer may be formed C) from the reaction of
i) a polytetramethylene glycol, toluenediisocyanate and 4,4'isopropylidenedicyclohexanol followed by a subsequent capping reaction with toluene diisocyanate and hydroxypropyl (meth)acrylate or hydroxyethyl (meth)acrylate;
   or
ii) a hydroxy functionalized polyether, a polyester and toluene diisocyanate with hydroxypropyl (meth)acrylate and isobornyl (meth)acrylate, wherein the polyester has a molecularweight (Mw) from 400 to 10,000, more preferably from 700 to 3,500 and/or wherein the polyether has a molecular weight (Mw) from 400 to 10,000, more preferably from 700 to 3,500, wherein the molecular weight is measured by high performance size-exclusion chromatography (GPC), according to ASTM D5296-05;
   or
iii) a polytetrahydrofuran having a molecular weight (Mw) of 2000 and toluene diisocyanate with 4,4'-isopropylidenedicyclohexanol, hydroxypropyl (meth)acrylate, hydroxyethyl (meth)acrylate and isobornyl (meth)acrylate, wherein the molecular weight is measured by high performance size-exlusion chromatography (GPC), according to ASTM D5296-05.

Suitable commercially available aromatic urethane (meth)acrylate oligomers for use in the present invention include but are not limited to aromatic urethane acrylate oligomer in 20% triethylene glycol dimethacrylate, aromatic urethane acrylate oligomer in 20% isobornyl methacrylate and aromatic urethane acrylate oligomer from Henkel Corp.

The urethane (meth)acrylate oligomer may be present in the composition according to the present invention from 15% to 70% by weight of the total weight of the first part, preferably from 20% to 65%, and more preferably from 25% to 60%.

If the quantity of the aromatic urethane (meth)acrylate oligomer is less than 15% this may lead the composition to be too rigid, have an impact drop test failures and the fixture time may be negatively affected. Whereas quantities above 70% may lead too high viscosity.

The composition according to the present invention comprises a rubber. The rubber is present in a first part of the composition and in a second parent of the composition, however, the rubber in the first part is different than the rubber in the second part. Two different rubbers are used in the present invention to achieve the desired impact resistance without compromising the fixture time and high temperature, high humidity performance.

The rubber in the first part may be liquid or solid natural or synthetic rubber elastomeric polymer. Preferably the rubber is selected from the group consisting of polybutadienes, functionalized polybutadienes, polyisobutylenes, functionalized polyisobutylenes, butadiene-acrylonitrile copolymers, functionalized butadiene-acrylonitrile copolymers, functionalized styrene-butadiene copolymers, styrene butadiene copolymers, polyisoprenes, ethylene-propylene copolymers, and mixtures thereof, wherein said polybutadienes, polyisobutylenes, butadiene-acrylonitrile copolymers and styrene-butadiene copolymers are functionalized with a functional group selected from the group consisting of a hydroxyl, a carboxyl, a carboxylic acid anhydride, an epoxy, and mixtures thereof, more preferably the rubber is selected from the group consisting of ethylene acrylate elastomer, acrylonitrile-butadiene copolymer-epoxy adduct, butyl rubber, styrene-butadiene rubber, butadiene-acrylonitrile rubber, ethylene-propylene rubber, ethylene propylene diene rubber, an acrylonitrile butadiene styrene copolymer, a polyvinyl butyral, butadiene rubber, and mixtures thereof.

Above listed rubbers are preferred because they provide good impact resistant properties while hydrophobic properties of the selected rubbers ensure that they do not impact high temperature, high humidity performance.

Suitable commercially available rubber for use in the present invention include but is not limited to Vamac VCS5500 from Dupont.

The rubber may be present in the first part of the composition according to the present invention from 2% to 20% be weight of the total weight of the first part, preferably from 5% to 15%, and more preferably from 5% to 12%.

If the quantity of the rubber in the first part is less than 2% it may not have a positive effect to impact drop test, whereas higher quantity than 20% may lead too high viscosity, which may cause processing difficulties.

The rubber in the second part of the composition according to the present invention is nitrile butadiene rubber. Nitrile butadiene rubber provides improved impact resistance without negatively impacting fixture time and high temperature, high humidity performance.

Suitable commercially available nitrile butadiene rubber for use in the present invention include but is not limited to Nipol DN 401 LL from Zeon Corp.

Nitrile butadiene rubber may be present in the second part of the composition according to the present invention from 2% to 20% by weight of the total weight of the second part, preferably from 3% to 18% and more preferably from 4% to 15%.

If the quantity of nitrile butadiene rubber in the second part is less than 2% it may not have an effect to impact drop test, whereas higher quantity than 20% may lead too high viscosity which may cause processing difficulties.

The composition according to the present invention comprises an adhesion promoter.

Suitable adhesion promoter is a phosphoric acid (meth)acrylate, preferably selected from the group consisting of phosphoric acid 2-hydroxymethyl methacrylate ester, 2-methacryloyloxyethyl acid phosphate, mono-(2-hydroxyethylmethacrylate)phosphate, 2-hydroxyethylmethylacrylate acid phosphate, bis(2-methacryloxyethyl) phosphate and mixtures thereof, preferably the adhesion promoter is 2-hydroxyethylmethylacrylate acid phosphate.

The above listed phosphoric acid (meth)acrylates improve adhesion of the composition on inactive metallic surfaces at low concentrations, especially in high temperature, high humidity conditions.

Suitable commercially available adhesion promoter for use in the present invention include but is not limited to JPA 514 from Johoku Chemical Co., Ltd.

The adhesion promoter may be present in the composition according to the present invention from 0.01% to 2% by weight of the total weight of the first part, preferably from 0.1% to 1.5% and more preferably from 0.2% to 1%.

If the quantity of the adhesion promoter is less than 0.01% it may not have an adhesion promoting effect, whereas higher quantity than 2% may lead to a slow adhesion speed, and increased fixture time.

The composition according to the present invention comprises a radical initiator. The suitable radical initiator for use in the present invention is an organic peroxide.

The radical initiator is preferably selected from the group consisting of cyclic peroxides, diacyl peroxides, dialkyl peroxides, hydroperoxides, peroxycarbonates, peroxydicarbonates, peroxyesters, and peroxyketals, more preferably selected from the group consisting cumene hydroperoxide (CHP), para-menthane hydroperoxide, t-butyl hydroperoxide (TBH), t-butyl peroxybenzoate, t-butyl peroxy pivalate, di-t-butyl peroxide, t-butyl peroxy acetate, t-butyl peroxy-2-hexanoate, t-amyl hydroperoxide, 1,2,3,4-tetramethylbutyl hydroperoxide, benzoyl peroxide, dibenzoyl peroxide, 1,3-bis(t-butylperoxyisopropyl) benzene, diacetyl peroxide, butyl 4,4-bis (t-butylperoxy) valerate, p-chlorobenzoyl peroxide, t-butyl cumyl peroxide, di-t-butyl peroxide, dicumyl peroxide, di(dodecanoyl) peroxide, 2,5-dimethyl-2,5-di-t-butylperoxyhexane, 2,5-dimethyl-2,5-di-t-butyl-peroxyhex-3-yne, 4-methyl-2,2-di-t-butylperoxypentane and mixtures thereof.

Suitable commercially available radical initiators for use in the present invention include but are not limited to Perbutyl Z from NOF Corp. and Irgacure 184 from IGM Resins B.V.

The radical initiator may be present in the composition according to the present invention from 0.1% to 7% by weight of the total weight of the first part, preferably from 0.5% to 6% and more preferably from 0.6% to 5%.

If the quantity of the radical initiator is less than 0.1% it may not have desired and required cure speed, whereas higher quantity than 7% may lead to instability of the adhesive and too high quantity may also result in low molecular weight polymer formation and a brittle cured polymer.

The composition according to the present invention comprises a reducing agent. The suitable reducing agent for use in the present invention is a metal or a metal salt.

Preferably reducing agent is selected from the group consisting of titanium, chromium, manganese, iron, cobalt, nickel, copper, zinc, silver, vanadium, molybdenum, ruthenium, cobalt (II) naphthenate, copper carbonate, copper (II) acetylacetonate, copper naphtenate, silver nitrate, vanadium (III) acetylacetonate, iron (II) naphthenate, copper disodium ethylenediamine tetraacetic acid (EDTA.2Na.Cu(II)), copper naphthenate, vanadium acetylacetonate, vanadyl acetylacetonate, iron (II) acetate, and mixtures thereof, preferably the reducing agent is selected from copper naphtenate, and mixtures thereof.

Suitable commercially available reducing agent for use in the present invention include but is not limited to Copper naphthenate 8% from OMG Americas Inc.

The reducing agent may be present in the composition according to the present invention from 0.1% to 10% by weight of the total weight of the second part, preferably from 0.5% to 6% and more preferably from 0.8% to 5%.

If the quantity of the reducing agent is less than 0.1% it may not have desired and required cure speed, whereas higher quantity than 10% may lead to an over formulated composition leaving contaminants in the cured products, monomers etc.

The composition according to the present invention may comprises a cure accelerator. Suitable cure accelerator for use in the present invention may be an aromatic amine, an aliphatic amine, an aromatic amide or an aromatic imide.

Preferably, the cure accelerator is selected from the group consisting of saccharin, N-chloro saccharin (NCS), o-benzoic sulfimide sodium salt (SBS), tributylamine, toluidines, acetylpenyl hydrazine, tetrahydroquinoline, and mixtures thereof.

Suitable commercially available reducing agent for use in the present invention include but is not limited to saccharin from Shanghai Fortune Chemical Co., Ltd.

The cure accelerator may be present in the composition according to the present invention from 0.1% to 10% by weight of the total weight of the second part, preferably from 0.2% to 5% and more preferably from 0.3% to 3%.

The composition according to the present invention may further comprise a (meth)acrylate monomer. It is noted that the (meth)acrylate monomer suitable for use in the present invention does not comprise OH-group(s) and is non-polar. The (meth)acrylate monomer may be present in the first part of the composition and/or in a second part of the composition. Further, the (meth)acrylate monomer may be same or different, if present, in the first and second parts.

Suitable (meth)acrylate monomer, which can be same or different in the first part and in the second part, and may be independently selected to the first group and the second group from the group consisting of methyl (meth)acrylate, ethyl (meth)acrylate, n-propyl (meth)acrylate, isopropyl (meth)acrylate, n-butyl(meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl(meth)acrylate, 2-ethylhexyl-(meth)acrylate, nonyl (meth) acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, stearyl(meth)acrylate, glycidyl (meth)acrylate, isobornyl (meth)acrylate, 2-aminoethyl (meth)acrylate, y-(meth)acryloyloxypropyl trimethoxysilane, (meth)acrylic acid-ethylene oxide adduct, trifluoromethylmethyl (meth)acrylate, 2-trifluoromethylethyl (meth)acrylate, 2-perfluoro ethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate, and mixtures thereof, preferably said (meth)acrylate monomer is selected from the group consisting of isobornyl methacrylate, isobornyl acrylate, benzyl methacrylate, benzyl acrylate, and mixtures thereof.

Above listed monofunctional (meth)acrylate monomers are preferred because they are monofunctional in terms of (meth)acrylate functionality, and therefore they will not introduce too much crosslinking in the cured polymer, and hence, brittleness.

The (meth)acrylate monomer may be present in the first part of the composition according to the present invention from 10% to 35% by weight by the total weight of the first part, preferably from 12.5% to 30% and more preferably from 15% to 20% and/or the (meth)acrylate monomer may be present in the second part of the composition according to the present invention from 20% to 70% by weight by the total weight of the second part, preferably from 30% to 65% and more preferably from 40% to 60%.

The applicant has found out that the above-mentioned ranges provide ideal cure speed, viscosity and good high temperature, high humidity performance.

The curable two-step and two-part adhesive composition according to present invention may further comprise optional ingredients in a first part and/or in a second part of the composition.

Non-limiting examples of optional ingredients are stabilizers such as metal chelators; free radical stabilisers such as dibutylhydroxytoluene, ethylenediamine tetraacetic acid (EDTA), p-benzoquinone; thickeners; fluorescent additives; dyes and mixtures thereof.

The first part and the second part of the curable two-part adhesive composition according to the present invention may be mixed in a ratio of from 0.5 to 2.0: 1, preferably at 1:1.

The Applicant has found out that the above ratios provide ideal impact resistance, cure speed and high temperature, hight humidity performance.

Viscosity of the first part of the curable two-step and two-part adhesive composition according to the present invention is preferably from 9 to 13 Pa.s /25°C, wherein the viscosity is measured was measured by HAAKE RheoStress 3000 viscometer, shear rate 10^{s-1}, spindle 35/2° Cone at 25°C.

Viscosity of the second part of the curable two-step and two-part adhesive composition according to the present invention is preferably from 5 to 8 Pa.s/25°C, wherein the viscosity is measured was measured by HAAKE RheoStress 3000 viscometer, shear rate 10^{s-1}, spindle 35/2° Cone at 25°C.

Fixture time of the of the curable two-step and two-part adhesive composition according to the present invention is preferably below 45 seconds, more preferably from 30 to 40 seconds, wherein the fixture time is measured according to ISO 4587.

UV fixture time of the of the curable two-step and two-part adhesive composition according to the present invention is preferably below 10 seconds, wherein the UV fixture time is measured at 100 mW/cm² intensity with high pressure mercury lamp used according to ISO 4587.

Initial lap shear strength of the curable two-step and two-part adhesive composition according to the present invention is preferably above 15 MPa, wherein the initial lap shear strength, on zinc dichromate coated steel, was measured by Shimadzu AGS-X tester having sample cured three days at room temperature.

Lap shear strength of the curable two-step and two-part adhesive composition according to the present invention after 72hours at 80°C and 90% humidity is preferably above 8 MPa, wherein the initial lap shear strength, on zinc dichromate coated steel, was measured by Shimadzu AGS-X tester having the original sample cured three days at room temperature.

Impact drop test (drop times to failure) of the curable two-step and two-part adhesive composition according to the present invention is preferably more than 25. The impact drop test is carried out manually by dropping X-cross test piece sample vertically starting from 1m height. The test samples are prepared as follows: 1) two zinc dichromate coated steel lap shears of dimensions 100 mm in length and 25 mm in width are prepared for bonding by cleaning with IPA. One lap shear will be known as lap shear A and the other lap shear B; 2) a bead of product A is applied to approximately 50 mm from the top of lap shear A and product B approximately 50 mm from top of lap shear B at a ratio of 1:1 A:B; 3) lap shear A is placed perpendicularly onto lap shear B to form a cross bond, ensuring product A is in full contact with product B (this will produce a bonding area of 625 mm²); 4) the combined lap shears are clamped to hold in place with clamps capable of apply a clamp load of 45-90 N each, 5) the combined lap shears are allowed to cure for 72 hours at room temperature; 6) the clamps are removed; 7) the test piece is dropped vertically from a height of 1 meter onto a concrete block; 8) the test is repeated until the combined lap shears disassemble.

The compositions according to the present invention may be prepared using any conventional methods which are well known to the skilled person. For instance, the components of the inventive compositions may be mixed together in any convenient order consistent with the roles and functions the components are to perform in the compositions. Conventional mixing techniques using known apparatus may be employed, for example Thinky ARE-310, planetary centrifugal mixer can be used.

The compositions according to the present invention may be applied to a variety of substrates to perform with the desired benefits and advantages described herein. For instance, appropriate substrates may be constructed from AINiCo magnets, ferrite magnets, sintered neodymium magnets, steel, zinc dichromate coated steel, zinc chromate coated steel, nickel, nickel coated steel, galvanised steel, zinc phosphate coated steel, zinc-flake coated steel, and mixtures thereof.

The present invention also relates to use of the curable two-step and two-part adhesive composition according to the present invention as a structural adhesive, preferably as a structural adhesive in speaker magnet bonding, e-motor structural bonding and metal component bonding.

The present invention relates to a method of bonding two substrates comprising a following steps:
1) applying a first part of a curable two-step and two-part adhesive composition according to the present invention to a first substrate to be bonded;
2) applying a second part of a curable two-step and two-part adhesive composition according to the present invention to a second substrate to be bonded;
3) overlaying the first substrate on the second substrate, or overlaying the second substrate on the first substrate; and
4) bonding the first substrate to the second substrate by mixing the first part and the second part of the curable two-step and two-part adhesive composition at the bond line and curing the composition.

The first substrate and the second substrate can be same or different material and selected independently from the group consisting of AINiCo magnets, ferrite magnets, sintered neodymium magnets, steel, zinc dichromate coated steel, zinc chromate coated steel, nickel, nickel coated steel, galvanised steel, zinc phosphate coated steel, zinc-flake coated steel, and mixtures thereof.

The following examples are illustrative of the present invention and are not intended to limit the scope of the invention in any way.

### Examples

Viscosity (Pa.s/25°C), Fixture time (seconds), UV Fixture Time (seconds), Lap shear strength (MPa, initial), Lap shear strength (MPa, 80C 90% 72hours) and Impact Drop test (drop times to failure) were all measured according to the test methods described in the above description.

Composition details and tests results are listed in the table below.

| Component | | | | Example 1^{*1}, weight% | | Example 2, weight% | | Comparative -3, weight% | | Comparative -4, weight% | | Comparative -5, weight% | | Comparative -6, weight% | |
|---|---|---|---|---|---|---|---|---|---|---|---|---|---|---|---|
| Type | Material name | Description | Supplier | Part A | Part B | Part A | Part B | Part A | Part B | Part A | Part B | Part A | Part B | Part A | Part B |
| Monomer | 2-HEMA | 2-hydroxyethyl methacrylate | Mitsubishi Gas Chemical Co., Ltd. | 22,0 | 30,9 | 20,0 | 30,9 | 15,0 | 15,0 | 20,0 | 20,0 | 15,0 | 15,0 | 15,0 | 15,0 |
| | Light Ester IB-X | Isobornyl methacrylate | Kyoeisha Chemical Co., Ltd. | | 55,0 | | 55,0 | 20,0 | 20,0 | | | 30,4 | 26,9 | 19,1 | 19,1 |
| | Light Ester BZ | Benzyl methacrylate | Kyoeisha Chemical Co., Ltd. | 20,0 | | 20,0 | | | | | | | | | |
| | JPA 514 | 2-Hydroxyethyl methacrylate acid phosphate | Johoku Chemical Co., Ltd. | 0,4 | 0,4 | 0,4 | 0,4 | | | | | 0,4 | 0,4 | 0,4 | 0,4 |
| Oligomer | Rigid resin IIB | Aromatic urethane acrylate oligomer in 20% triethylene glycol dimethacrylate | Henkel Corp. | 5,0 | | 5,0 | | | | | | | | | |
| | Block resin II | Aromatic rethane acrylate oligomer in 20% isobornyl methacrylate | Henkel Corp. | 33,4 | | 33,4 | | 30,0 | 30,0 | | | 50,0 | 55,0 | 30,0 | 30,0 |
| | Flex resin II | Aromatic urethane acrylate oligomer | Henkel Corp. | 8,0 | | 8,0 | | | | | | | | | |
| | Ebecryl 4491 | Aliphatic urethane acrylate oligomer in 20% isobornyl methacrylate | Daicel-Allex Ltd | | | | | 31.3 | 32.8 | 76.3 | 77.8 | | | 31.3 | 32.8 |
| Rubber | Vamac VCS5500 | Ethylene acrylate elastomer | Dupont | 7,0 | | 7,0 | | | | | | | | | |
| | Nipol DN 401 LL | Acryolnitrile butadiene rubber | Zeon Corp. | | 11,0 | | 11,0 | | | | | | | | |
| Reducing agent | Copper naphthenat e 8% | Copper naphthenate 8% | OMG Americas Inc. | | 2,5 | | 2,5 | | 2,0 | | 2,0 | | 2,5 | | 2,5 |
| Cure accelerator | Saccharin | Saccharin | Shanghai Fortune Chemical Co., Ltd. | 1,0 | | 1,0 | | 1,0 | | 1,0 | | 1,0 | | 1,0 | |
| Initiator | Perbutyl Z | t-butyl peroxybenzoate | NOF Corp. | 2,5 | | 2,5 | | 2,0 | | 2,0 | | 2,5 | | 2,5 | |
| | Irgacure 184 | 1-Hydroxycyclohexyl phenyl ketone | IGM Resins B.V. | | | 2,0 | | | | | | | | | |
| Additive | Premix 182017 | EDTA solution | Henkel Corp. | 0,1 | | 0,1 | | 0,1 | | 0,1 | | 0,1 | | 0,1 | |
| | Premix 12 | p-benzoquinone solution | Henkel Corp. | 0,1 | | 0,1 | | 0,1 | | 0,1 | | 0,1 | | 0,1 | |
| | BHT | dibutylhydroxytolue ne | Shanghai JinNiu Chemical Com. | | 0,2 | | 0,2 | | 0,2 | | 0,2 | | 0,2 | | 0,2 |
| | APH | phenylhydrazine | Borregaar d Synthesis, Inc. | 0,5 | | 0,5 | | 0,5 | | 0,5 | | 0,5 | | 0,5 | |
| Additive | Premix 182017 | EDTA solution | Henkel Corp. | 0,1 | | 0,1 | | 0,1 | | 0,1 | | 0,1 | | 0,1 | |
| TOTAL | | | | 100 | 100 | 100 | 100 | 100 | 100 | 100 | 100 | 100 | 100 | 100 | 100 |
| Viscosity, Pa.s/25°C | | | | 10.3 2 | 6.48 9 | 11.4 6 | 6.48 9 | 10.4 5 | 11.9 2 | 7.15 3 | 9.84 3 | 5.34 0 | 8.78 9 | 10.8 9 | 11.2 4 |
| Fixture time, seconds | | | | 40 | | 30 | | 40 | | 50 | | 70 | | 50 | |
| UV Fixture Time, seconds | | | | - | | 5 | | - | | - | | - | | - | |
| Lap shear strength, MPa, initial | | | | 16,5 | | 16,8 | | 10,1 | | 4,8 | | 10,4 | | 7,9 | |
| Lap shear strength, MPa, 80C 90% 72hours | | | | 9,9 | | 9,0 | | 0,0 | | 0,3 | | 9,3 | | 2,0 | |
| Impact Drop test, drop times to failure | | | | 57 | | 26 | | 2 | | 9 | | 2 | | 9 | |

The examples according to the present invention exemplify good initial strength on zinc dichromate inactive metals, strength retention after exposure to tough high temperature, high humid environments with good fixture time and excellent impact resistance. These properties are also improvement over the adhesives currently on the market.

In view of the foregoing description and examples, it will be apparent to those skilled in the art that equivalent modifications thereof can be made without departing from the scope of the claims.

## Claims

1. A curable two-step and two-part adhesive composition comprising:
a first part comprising:
at least one (meth)acrylate monomer comprising OH-group;
an urethane (meth)acrylate oligomer;
a rubber;
an adhesion promoter; and
a radical initiator;
and
a second part comprising:
at least one (meth)acrylate monomer comprising OH-group, which can be same or different than the at least one (meth)acrylate monomer comprising OH-group in the first part;
a nitrile butadiene rubber; and
a reducing agent.

2. A curable two-step and two-part adhesive composition according to claim 1, wherein the (meth)acrylate monomer comprising OH-group is independently selected to the first part and the second part from the group consisting of 2-hydroxyethyl (meth)acrylate, 2-hydroxypropyl(meth)acrylate, 2-hydroxybutyl (meth)acrylate, 1,6-hexanedioldiacrylate, dipentaerythritol monohydroxy penta(meth)acrylate, hydroxypentyl methacrylate, hydroxyheptyl methacrylate, hydroxynonyl metacrylate, hydroxydecyl methacrylate, their positions isomers, the ethoxylated and or propoxylated derivatives thereof, the adducts thereof with lactones, diethyleneglycol mono methacrylate, polypropylene glycol mono methacrylate, and mixtures thereof, preferably said (meth)acrylate monomer comprising OH-group is 2-hydroxyethyl methacrylate.

3. A curable two-step and two-part adhesive composition according to claim 1 or 2, wherein the (meth)acrylate monomer comprising OH-group is present in the first part from 10% to 50% by weight by the total weight of the first part, preferably from 12.5% to 40% and more preferably from 15% to 35%
and/or
wherein the (meth)acrylate monomer comprising OH-group is present in the second part from 10% to 60% by weight by the total weight of the second part, preferably from 15% to 50% and more preferably from 20% to 40%.

4. A curable two-step and two-part adhesive composition according to any of claims 1 to 3, wherein the urethane (meth)acrylate oligomer is formed:
A) from the reaction of a diisocyanate and polyol followed by a subsequent capping reaction with a hydroxy-functional (meth)acrylate;
or
B) from the reaction of a diisocyanate and a hydroxy-functional (meth)acrylate;
or
C) from the reaction of
i) a polytetramethylene glycol, toluenediisocyanate and 4,4'isopropylidenedicyclohexanol followed by a subsequent capping reaction with toluene diisocyanate and hydroxypropyl (meth)acrylate or hydroxyethyl (meth)acrylate;
or
ii) a hydroxy functionalized polyether, a polyester and toluene diisocyanate with hydroxypropyl (meth)acrylate and isobornyl (meth)acrylate;
or
iii) a polytetrahydrofuran having a molecular weight (Mw) of 2000 and toluene diisocyanate, reacted with 4,4'-isopropylidenedicyclohexanol, hydroxypropyl (meth)acrylate, hydroxyethyl (meth)acrylate and isobornyl (meth)acrylate.

5. A curable two-step and two-part adhesive composition according to any of claims 1 to 4, wherein the urethane (meth)acrylate oligomer is present from 15% to 70% by weight of the total weight of the first part, preferably from 20% to 65%, and more preferably from 25% to 60%.

6. A curable two-step and two-part adhesive composition according to any of claims 1 to 5, wherein the rubber is liquid or solid natural or synthetic rubber elastomeric polymer, preferably selected from the group consisting of polybutadienes, functionalized polybutadienes, polyisobutylenes, functionalized polyisobutylenes, butadiene-acrylonitrile copolymers, functionalized butadiene-acrylonitrile copolymers, functionalized styrene-butadiene copolymers, styrene butadiene copolymers, polyisoprenes, ethylene-propylene copolymers, and mixtures thereof, wherein said polybutadienes, polyisobutylenes, butadiene-acrylonitrile copolymers and styrene-butadiene copolymers are functionalized with a functional group selected from the group consisting of a hydroxyl, a carboxyl, a carboxylic acid anhydride, an epoxy, and mixtures thereof, more preferably the rubber is selected from the group consisting of ethylene acrylate elastomer, acrylonitrile-butadiene copolymer-epoxy adduct, butyl rubber, styrene-butadiene rubber, butadiene-acrylonitrile rubber, ethylene-propylene rubber, ethylene propylene diene rubber, an acrylonitrile butadiene styrene copolymer, a polyvinyl butyral, butadiene rubber, and mixtures thereof.

7. A curable two-step and two-part adhesive composition according to any of claims 1 to 6, wherein the rubber is present from 2% to 20% be weight of the total weight of the first part, preferably from 5% to 15%, and more preferably from 5% to 12%.

8. A curable two-step and two-part adhesive composition according to any of claims 1 to 7, wherein the adhesion promoter is a phosphoric acid (meth)acrylate, preferably selected from the group consisting of phosphoric acid 2-hydroxymethyl methacrylate ester, 2-methacryloyloxyethyl acid phosphate, mono-(2-hydroxyethylmethacrylate)phosphate, 2-hydroxyethylmethylacrylate acid phosphate, bis(2-methacryloxyethyl) phosphate and mixtures thereof, preferably the adhesion promoter is 2-hydroxyethylmethylacrylate acid phosphate.

9. A curable two-step and two-part adhesive composition according to any of claims 1 to 8, wherein the adhesion promoter is present from 0.01% to 2% by weight of the total weight of the first part, preferably from 0.1% to 1.5% and more preferably from 0.2% to 1%.

10. A curable two-step and two-part adhesive composition according to any of claims 1 to 9, wherein the radical initiator is an organic peroxide, preferably selected from the group consisting of cyclic peroxides, diacyl peroxides, dialkyl peroxides, hydroperoxides, peroxycarbonates, peroxydicarbonates, peroxyesters, and peroxyketals, more preferably selected from the group consisting cumene hydroperoxide (CHP), para-menthane hydroperoxide, t-butyl hydroperoxide (TBH), t-butyl peroxybenzoate, t-butyl peroxy pivalate, di-t-butyl peroxide, t-butyl peroxy acetate, t-butyl peroxy-2-hexanoate, t-amyl hydroperoxide, 1,2,3,4-tetramethylbutyl hydroperoxide, benzoyl peroxide, dibenzoyl peroxide, 1,3-bis(t-butylperoxyisopropyl) benzene, diacetyl peroxide, butyl 4,4-bis (t-butylperoxy) valerate, p-chlorobenzoyl peroxide, t-butyl cumyl peroxide, di-t-butyl peroxide, dicumyl peroxide, di(dodecanoyl) peroxide, 2,5-dimethyl-2,5-di-t-butylperoxyhexane, 2,5-dimethyl-2,5-di-t-butyl-peroxyhex-3-yne, 4-methyl-2,2-di-t-butylperoxypentane and mixtures thereof.

11. A curable two-step and two-part adhesive composition according to any of claims 1 to 10, wherein the peroxide is present from 0.1% to 7% by weight of the total weight of the first part, preferably from 0.5% to 6% and more preferably from 0.6% to 5%.

12. A curable two-step and two-part adhesive composition according to any of claims 1 to 11 wherein the nitrile butadiene rubber is present from 2% to 20% by weight of the total weight of the second part, preferably from 3% to 18% and more preferably from 4% to 15%.

13. A curable two-step and two-part adhesive composition according to any of claims 1 to 12, wherein the reducing agent is a metal or a metal complex, preferably selected from the group consisting of titanium, chromium, manganese, iron, cobalt, nickel, copper, zinc, silver, vanadium, molybdenum, ruthenium, cobalt (II) naphthenate, copper carbonate, copper (II) acetylacetonate, copper naphtenate, silver nitrate, vanadium (III) acetylacetonate, iron (II) naphthenate, copper disodium ethylenediamine tetraacetic acid (EDTA.2Na.Cu(II)), copper naphthenate, vanadium acetylacetonate, vanadyl acetylacetonate, iron (II) acetate, and mixtures thereof, preferably the reducing agent is selected from copper naphtenate, saccharin and mixtures thereof.

14. A curable two-step and two-part adhesive composition according to any of claims 1 to 13, wherein the reducing agent is present from 0.1%to 10% by weight of the total weight of the second part, preferably from 0.5% to 6% and more preferably from 0.8% to 5%.

15. Use of the curable two-step and two-part adhesive composition according to any of preceding claims 1 to 14 as a structural adhesive, preferably as a structural adhesive in speaker magnet bonding, e-motor structural bonding and metal component bonding.

16. A method of bonding two substrates comprising a following steps:
1) applying a first part of a curable two-step and two-part adhesive composition according to any of preceding claims 1 to 14 to a first substrate to be bonded;
2) applying a second part of a curable two-step and two-part adhesive composition according to any of preceding claims 1 to 14 to a second substrate to be bonded;
3) overlaying the first substrate on the second substrate, or overlaying the second substrate on the first substrate; and
4) bonding the first substrate to the second substrate by mixing the first part and the second part of the curable two-step and two-part adhesive composition at the bond line and curing the composition.
